# EUROPÄISCHE PATENTSCHRIFT

(11) **EP 2 641 503 B1**
(45) Veröffentlichungstag und Bekanntmachung des Hinweises auf die Patenterteilung: **23.04.2014**
(21) Anmeldenummer: 13405038.4
(22) Anmeldetag: 21.03.2013
(51) Int. Cl.: A47B 13/00

(54) **Gratleiste für Brettflächen und Platten**
Sliding dovetail for board surfaces and plates
Baguette à sillons pour surfaces de planche et plaques

(30) Priorität: 23.03.2012 CH 418122012
(43) Veröffentlichungstag der Anmeldung: 25.09.2013
(73) Patentinhaber: Möbelfabrik Muotathal Paul von Rickenbach AG, 6436 Muotathal (CH)
(72) Erfinder: Von Rickenbach, Paul, 6436 Muotathal (CH)
(74) Vertreter: Frauenknecht, Alois J.

(56) Entgegenhaltungen:
- EP-A2- 1 880 637
- WO-A2-2006/093866
- FR-A1- 2 453 622
- US-A- 4 091 746
- US-A1- 2003 030 317
- US-B1- 8 282 307

## Beschreibung

Die vorliegende Erfindung bezieht sich auf eine Gratleiste nach dem Oberbegriff des Patentanspruchs 1.

Gratleisten sind definiert (Holzlexikon, Bd. 1, DRW-Verlag Weinbrenner GmbH und Co., 1962, Leinfelden-Echterdingen, DE) als: "Mit Grat versehene Leisten zum Einschieben (Einschubleisten). Breite Vollflächen werden durch Gratleisten am Werfen, nicht am Schwinden und Quellen gehindert."

Im Weiteren ist ein Grat definiert (Holzlexikon), als schwalbenschwanzförmige, sich meist etwas verjüngende Nut, die in der Regel quer zur Faserrichtung des Holzes eingearbeitet wird und Teil einer wichtigen Holzverbindung, insbesondere für Brettmöbel und Regale ist. Zum Geradehalten breiter Voll-Holzflächen, z.B. Tischplatten, Brettläden Türen, Zuschneidetafeln, Reissbrettern usw. werden Gratleisten, "stehende" oder "liegende", in Gratnuten stramm eingezogen. Die Brettfläche wird dadurch am Verziehen und Werfen, nicht aber am Schwinden (Austrocknen) und Quellen gehindert, und bleibt daher nur unter normalen Umgebungsbedingungen "stehen".

Solche ein Gerät ist aus der WO 2006/093866 A3 bekannt.

Nachteilig bei diesen bekannten Gratleisten ist zumindest eine endseitig offene Gratnut. Dies ist bei sichtbaren Kanten nicht nur unschön, sondern sie schwächt auch die Brettfläche mechanisch (Kerbfaktor). Das Problem des Schwindens, als Folge des Trocknens, und damit des Lockerwerdens von Gratleisten ist bisher ungelöst.

Es ist daher Aufgabe der vorliegenden Erfindung diese Nachteile zu beheben. Bei sichtbaren Kanten, insbesondere bei ästhetisch ansprechenden Holzkonstruktionen sollen keine offenen Nuten sichtbar sein. Zusätzlich soll die Brettfläche, auch im Randbereich, voll belastbar sein, ohne dass die Gefahr von Verbiegungen und/oder Brüchen entsteht. Es sollen auch Massnahmen geschaffen werden, die - vor allem in trockener Umgebung (Schwinden) oder feuchter Umgebung (Quellen) - die Stabilität von Holzkonstruktionen gewährleisten.

Diese Aufgabe ist durch die Merkmale des Patentanspruchs 1 gelöst.

Die erfindungsgemässe Lehre ermöglicht, unter minimaler Schwächung der zu verstärkenden plattenförmigen Brettfläche, kaum sichtbare Gratleisten einzubringen. Je nach Ausführungsform können diese Gratleisten gegen Schwinden und/oder Quellen gesichert aber auch dauerhaft elastisch verklebt werden.

Der Erfindungsgegenstand ist vorwiegend auf Platten aus Vollholz ausgelegt, nicht aber auf diese beschränkt. Verstärkungen sind auch bei Schichtplatten sinnvoll und können bei entsprechendem Einsatz der Gratleisten (z.B. durch Verkleben und/oder Laminieren) analoge Vorteile ergeben.

In abhängigen Ansprüchen sind vorteilhafte Weiterbildungen der Erfindung beschrieben.

Durch zwei Gratleisten bzw. durch eine Aufteilung einer Gratleiste in zwei Teile kann die Belastung symmetrisch bis zu den gegenüberliegenden Plattenenden erfolgen; Anspruch 2. Zudem ergibt sich an keinem Endbereich eine unschöne Lücke. Der zum Einscheiben der Gratleisten notwendige Zwischenraum ist in dieser Ausführung im Bereich der neutralen Faser und daher nur wenig belastet.

Zudem besteht gemäss Anspruch 3 die Möglichkeit den mittigen Zwischenraum Z durch ein flaches Passstück zu verschliessen, so dass dort keine Torsion resultiert.

Besonders vorteilhaft ist eine längs geteilte Gratleiste nach Anspruch 4, welche durch eine mittige Keilleiste in der Gratnut fixiert ist.

Eine Federbelastung des Keils, Anspruch 5, ergibt einen fortwährenden Ausgleich bei Dimensionsänderungen in der Gratnut, dies als Folge von Schwinden oder Quellen.

Vorteilhaft zur Vorspannung des Keils sind Blattfedern gemäss Anspruch 6, wobei diese in verschiedenen Ausführungsformen zur Anwendung gelangen können.

Eine oder mehrere Stiftschrauben, Anspruch 7, ggf. verteilt über die Länge der Gratleiste, gewährleisten dauerhaft eine optimale Passung der Leiste.

Besonders in der Massenfabrikation von Platten kann es wirtschaftlich günstig sein die in der Gratnut passende Kontur der Gratleiste zweistückig auszuführen; vgl. Anspruch 8. Bei entsprechender Ausgestaltung dient die in die Leiste eingelegt Kontur zusätzlich der Erhöhung der Biegefestigkeit.

Die Kontur kann nach Anspruch 9, je nach Abmessungen und Belastung aus einem geformten Blechstreifen, aber auch gemäss Anspruch 10 aus einem Giessteil bestehen.

An Hand von Zeichnungen werden nun Ausführungsbeispiele des Erfindungsgenstands dargestellt. Es zeigen:
- Fig. 1: eine vereinfachte Teil-Draufsicht einer Tischplatte, von unten betrachtet, mit einer Gratleiste vor deren Einsetzen,
- Fig. 2: eine zweiteilige, quergeteilte Gratleiste mit einem Zwischenraum in der neutralen Faser der Platte,
- Fig. 3: eine zweiteilige, längs geteilte Gratleiste mit einem federbelasteten Keil,
- Fig. 4: eine Querschnitts-Darstellung durch einen Schwalbenschwanz-Abschnitt einer bevorzugten Gratleiste,
- Fig. 5: eine Querschnitts-Darstellung einer in Belastungsrichtung verstärkten Gratleiste,
- Fig. 6: eine Querschnitts-Darstellung einer Gratleiste, vorbereitet für eine Doppelfunktion als Ablage,
- Fig. 7: eine Querschnitts-Darstellung einer Gratleiste, vorbereitet für eine Doppelfunktion zur einfachen Fixierung einer Tischplatte auf einem Ständer,
- Fig. 8: eine Querschnitts-Darstellung einer Gratleiste, vorbereitet für eine Doppelfunktion als Variante zu Fig. 7,
- Fig. 9: eine Querschnitts-Darstellung einer Gratleiste, vorbereitet für eine Doppelfunktion als weitere Variante zu Fig. 7,
- Fig. 10: eine Querschnitts-Darstellung einer besonders flachen Gratleiste,
- Fig. 11: eine Querschnitts-Darstellung einer als kippbare Auflage ausgestalteten Gratleiste,
- Fig. 12: eine Querschnitts-Darstellung einer Gratleiste mit Zierfunktion und
- Fig. 13: eine Variante einer Gratleiste mit einer eingelegten Kontur.

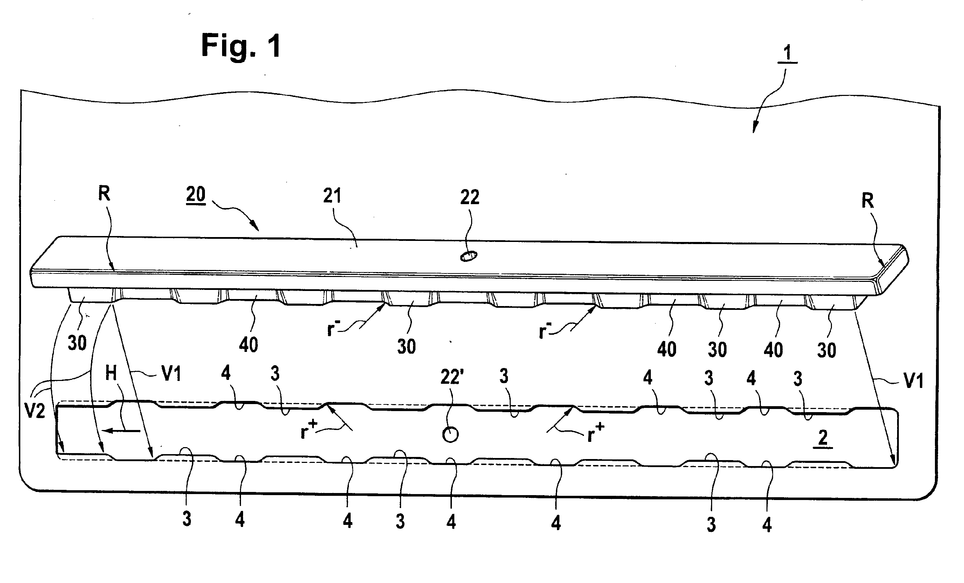

In Figur 1 ist mit 1 eine Brettfläche bezeichnet, welche vereinfacht und verkürzt eine Tischplatte von unten, in Draufsicht, darstellt.

In der Brettfläche 1 ist randseitig eine als Nut 2 (auch Gratnut genannt) dienende Ausnehmung eingearbeitet (ausgefräst), welche abschnittweise aus Schrägflächen 3, die einen Schwalbenschwanz bilden, und aus senkrechten Ausnehmungen 4 besteht. Als Folge des Fräsvorgangs, aber auch zur Verhinderung von unerwünschten Kerbwirkungen sind die Übergänge zwischen den Abschnitten mit einem Radius r+ versehen.

Die eigentliche Gratleiste ist über der Nut 2 gezeigt und mit 20 bezeichnet. Dies lässt sich passend in die Nut 2 einlegen und lateral, horizontal verschieben, d.h. dauerhaft Verklemmen.

Zu diesem Zweck weist die Gratleiste 20 auf ihrer Unterseite Abschnitte mit Schrägflächen 30 auf, die formschlüssig zu Schrägflächen 3 des Schwalbenschwanzes in der Nut 2 passen. Zwischen den Schrägflächen 30 befinden sich senkrechte Flächen 40, die gegenüber den korrespondierenden senkrechten Ausnehmungen 4 ein Untermass aufweisen. Die an der Gratleiste vorhandenen Radien r- weisen gegenüber den Radien r+ ebenfalls ein Untermass, passend zur Brettfläche 1 auf. Ebenfalls sind die äusseren Radien R zur Brettfläche 1 passend gewählt. Im Zentrum der Deckfläche befindet sich eine Bohrung 22. Die Deckfläche der einstückigen Gratleiste 20 ist mit 21 bezeichnet; sie kann zur Verstärkung aus einer metallischen Platte und/oder einem Profil bestehen.

Die Gratleistenverbindung erfolgt, in dem die Gratleiste 20 senkrecht mit ihrer rechten vorderen Ecke, vertikal auf die korrespondierende Ecke im der Ausnehmung 2 eingesetzt wird, was in Fig. 1 mit dem Pfeil V1 bezeichnet ist. Gerichtet wird die Leiste 20 durch das analoge Ausrichten auf der linken Seite, ebenfalls mit V1 bezeichnet.

Liegt die Gratleiste 20 in der Ausnehmung 2, so kann sie durch ein paar leichte Hammerschläge in horizontaler Richtung, bis zu deren Anschlag V2 verschoben werden, was durch einen Pfeil H symbolisiert ist. Jetzt nehmen die oberen Kanten die mit V2 bezeichneten Endstellungen ein.

Die Brettfläche 1 (Platte) ist dauerhaft verstärkt, sobald in die Bohrung 22 eine Schraube mit einem zylindrischen Schaft eingesetzt und in der zentralen Gewindebohrung 22', in der Ausnehmung 2, gesichert ist.

In den nachfolgenden Figuren sind gleiche Funktionsteile mit gleichen Bezugsziffern versehen.

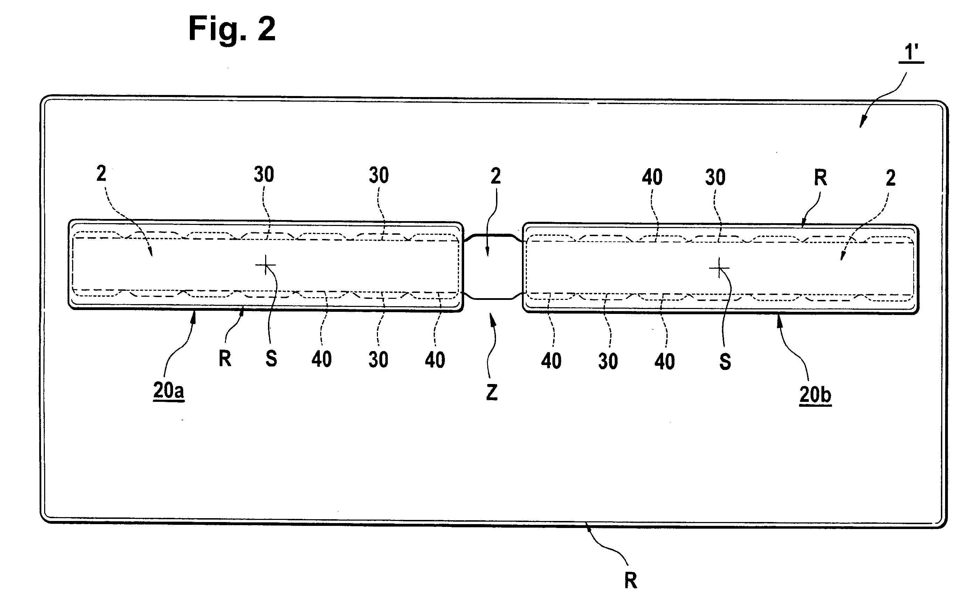

Aus Fig. 2 lässt sich eine Variante einer Gratleistenverbindung mit zwei Leisten 20a und 20b ersehen. Die beiden Leistenteile 20a, 20b sind an den durch Kreuze markierten Stellen S ebenfalls verschraubt. Der zwischen den Leisten 20a, 20b gebildete Zwischenraum Z kann formschlüssig durch ein eingesetztes Formteil verschlossen werden, was die Belastbarkeit der Platte geringfügig erhöht. An sich genügt eine schmale Einlage im Bereich der neutralen Faser des Zwischenraums Z.

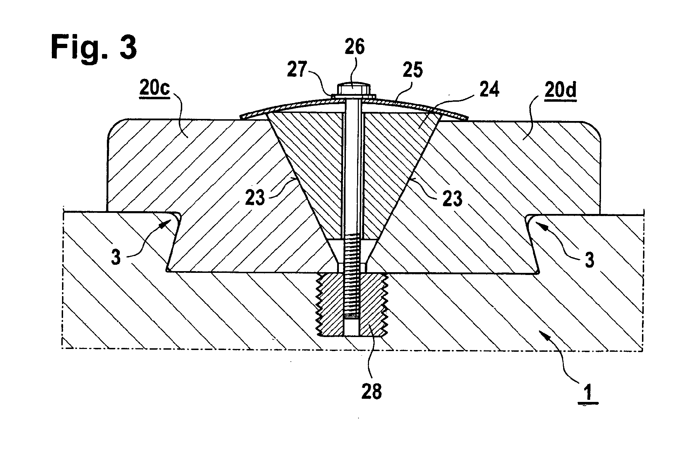

Eine vor allem bei der Gefahr des Schwindens von Holzteilen bevorzugte Lösung ist in der Schnittdarstellung (in einem Bereich 3 des Schwalbenschwanzes geschnitten), in Fig. 3, dargestellt. Hier sind wiederum zwei Gratleisten 20c und 20d vorgesehen, die zusammen in ihrer Wirkung eine einzige längs geteilte Gratleiste bilden. Auf der inneren Längsseite sind Schrägflächen 23 vorgesehen, auf denen eine Keilleiste 24 aufliegt. Im Zentrum des Keils 24 befindet sich mindestens eine Bohrung in der eine Schraube 26 eingesetzt ist und die Keilleiste 24 mittels einer Blattfeder 25 belastet (vorspannt). Zur Verstärkung der Schraubverbindung ist in der Brettfläche 1 eine handelsübliche Gewindebüchse 28 eingesetzt.

Aus Festigkeitsgründen sind hier, über die gesamte Länge der Gratnut verteilt, wenigsten drei Gewindebuchsen eingedreht und auch drei Blattfedern 25 mit Schrauben 26 und Unterlegscheiben 27, vorgesehen.

Aus ästhetischen Gründen können an exponierten Stellen, die Blattfedern 25 durch eine einzige konkave, federfähige Metallschiene ersetzt werden, welche die Verbindung 1;20 auf der ganzen Länge abdecken.

Alternativ können die Blattfedern 25, wenn nur die Dauerhaftigkeit und die Festigkeit der Verbindung wichtig sind, durch Tellerfedern (Federscheiben) ersetzt werden, die direkt auf den Keil 24, Fig. 3, wirken.

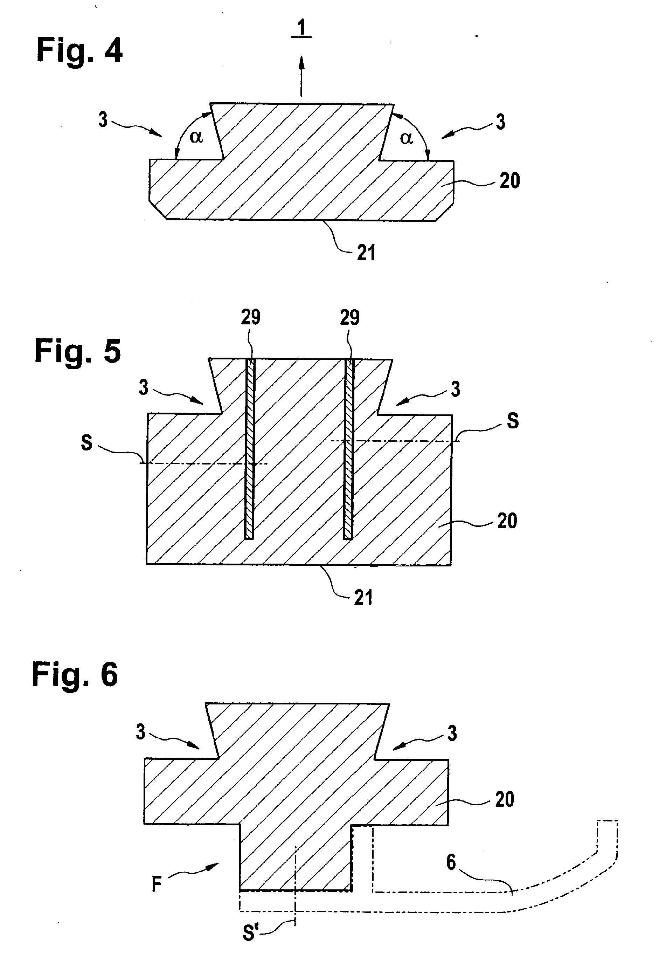

Die Standardform einer Gratleiste 20 ist in der Schnittdarstellung Fig. 4, ersichtlich. In der durch einen Pfeil angedeuteten Brettfläche 1 befindet sich eine entsprechende Gratnut.

Der Schwalbenschwanz mit seinen Schrägflächen 3 schliesst auf jeder Seite einen empirisch ermittelten Winkel α von 70° bis 80°, vorzugsweise von 76° ein. Eine Ausführungsform für hohe Belastungen zeigt die Fig. 5. In vertikalen Einschnitten in der Gratleiste 20 sind Blechstreifen 29 eingelegt und verklebt. Zusätzlich sind diese Blechstreifen 29 noch mittels Stiften S gegen Verschieben gesichert.

Die Gratleisten 20 können neben ihrer Verstärkungswirkung einer Platte auch eine Doppelfunktion ausüben, wie Fig. 6 bis Fig. 12 zeigen.

In Fig. 6 ist das untere Teil der Gratleiste 20 als Funktionsteil F ausgebildet; es dient der Anbringung von irgendwelchen Beschlägen etc. Strich-punktiert dargestellt ist hier eine Ablage 6 aus einem Formteil, was beispielsweise an einer Tischkante sinnvoll sein kann. Die Ablage 6 ist durch eine einfache Schraubverbindung S' lösbar gesichert.

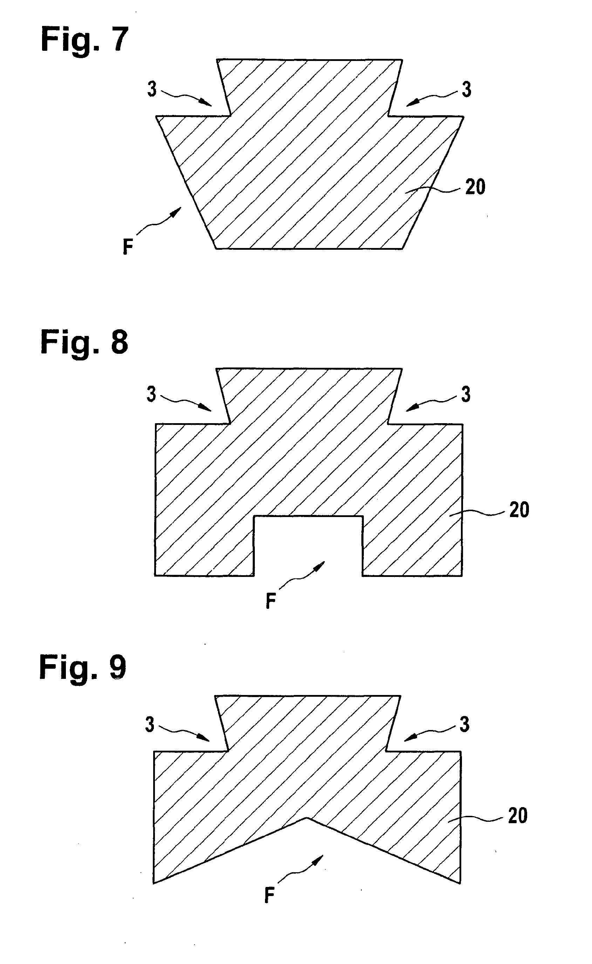

Nach Fig. 7 hat das Funktionsteil F eine abgeplattete Keilform. Diese dient der Zentrierung und Halterung der Brettfläche auf einem Ständer.

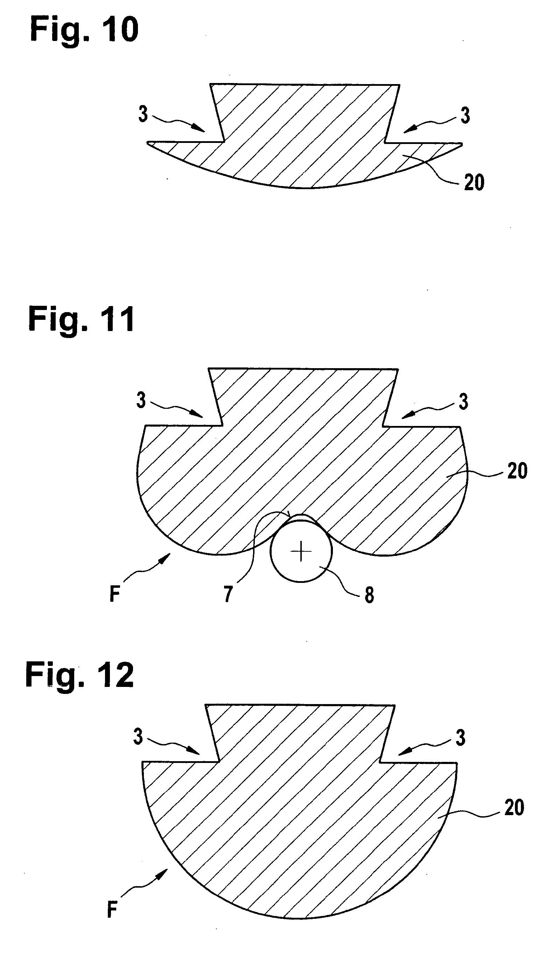

Varianten hierzu sind die weiteren Fig. 8, 9 und 11, wobei Fig. 9 und Fig. 11 Ausführungen sind, die ein Kippen und/oder Höhenverstellen der darüber befindlichen Platten ermöglichen.

Die Gratleiste 20 nach Fig. 10 ist auf eine minimale Höhe optimiert und beispielsweise an einer Tischplatte beinahe unsichtbar.

Die konkave Ausnehmung in der Gratleiste 20, Fig. 11, dient hier als Lagerfläche 7 für einen metallischen Zapfen 8.

Die Gratleiste 20 nach Fig. 12 deutet eine Zier-Funktion F an und lässt insbesondere bei rustikalen Möbeln viel Gestaltungsfreiraum zu.

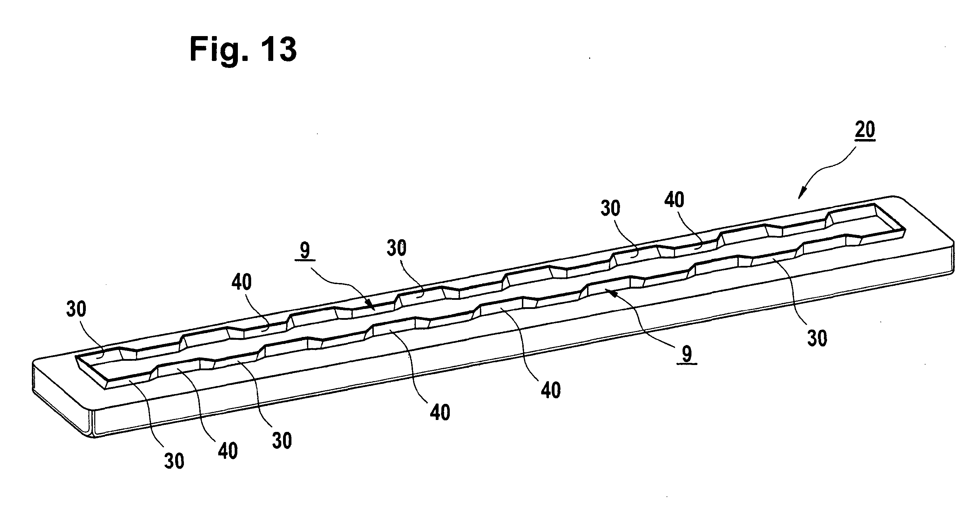

Die Gratleiste Fig. 13 ist - im Gegensatz zu den vorgängig beschriebenen Beispielen - nicht einstückig ausgeführt.

Es ist hier eine Einlage 9 vorgesehen, die entweder aus Blechstreifen zusammengesetzt oder geformt ist. Sie übernimmt die Funktion eines Formkörpers (Kontur) und verbindet die Gratleiste 20 mit der Platte 1.

Alternativ hierzu kann auch eine Einlage 9 aus einem Druckgussteil (Kunststoff oder Leichtmetall) bestehen und in der Gratleiste 20 verklebt sein.

Der Erfindungsgegenstand lasst sich auch an Kunststoffteile (Elektroschränke etc.) adaptierten, die heute oft aus Transport- und Verpackungsgründen zerlegt beim Endabnehmer eintreffen und dort zusammengesetzt bzw. gefügt werden.

An der Gratleiste der vorliegenden Verbindung können grosse Lasten angebracht werden, da sich hier deren üblicherweise Punktlasten, auf Flächenbelastungen transformieren. Durch eine präzise Ausgestaltung der Gratleistenverbindung, insbesondere im Bereich der Schrägflächen des Schwalbenschwanzes, ergibt sich eine hochbelastbare und lösbare Aufhängung, beispielsweise für Bauteile und Geräte.

## Patentansprüche

1. Gratleistenverbindung zum Geradehalten von Brettflächen und Platten mit wenigstens einer eingearbeiteten schwalbenschwanzförmigen Nut und einer in diese passend einschiebbare Gratleiste, **dadurch gekennzeichnet, dass** die Nut (2) an ihren Längsseiten, in gleichen Abständen zueinander und gegenüberliegend schwalbenschwanzförmige Schrägflächen (3) aufweist, dass sich an diese Schrägflächen (3) senkrecht verlaufende Ausnehmungen (4) anschliessen, welche die Schrägflächen (3) in gleichen Abständen unterbrechen, dass die Nut (2) sich beidseitig nur bis zum Randbereich der Brettfläche oder Platte (1) erstreckt und dass die wenigstens eine Gratleiste (20;20a-20d) abgesetzt ist und im schmalen Bereich Schrägflächen (30) aufweist, die durch senkrechte Ausnehmungen (40) unterbrochen sind, wobei die Gratleiste (20;20a-20d) senkrecht zur Brettfläche oder Platte (1) einlegbar und lateral in der Brettfläche (1) verschiebbar und fixierbar ist, und dass die Schrägflächen (30) zumindest partiell formschlüssig an den Schrägflächen (3) der Nut (2) anliegen.

2. Gratleistenverbindung nach Anspruch 1, **dadurch gekennzeichnet, dass** die Gratleiste (20a, 20b) zweiteilig ausgeführt ist und in der neutralen Faser der belasteten Brettfläche einen Zwischenraum (Z) bildet.

3. Gratleistenverbindung nach Anspruch 2, **dadurch gekennzeichnet, dass** der Zwischenraum (Z) durch ein festes oder flexibles Element zumindest partiell ausgefüllt oder fixiert ist.

4. Gratleistenverbindung nach Anspruch 1, **dadurch gekennzeichnet, dass** die Gratleiste (20c, 20d) längs geteilt ist und dass mittig, über die gesamte Länge der Gratleiste (20c,20d) ein Keil (24) eingelegt ist.

5. Gratleistenverbindung nach Anspruch 4, **dadurch gekennzeichnet, dass** der Keil (24) federbelastet, formschlüssig an zwei Schrägflächen (23) anliegt.

6. Gratleistenverbindung nach Anspruch 5, **dadurch gekennzeichnet, dass** die Federbelastung des Keils (24) über wenigstens eine vorgespannte Blattfeder (25) erfolgt, die mittig durch den Keil (24) in die Brettfläche (1) geschraubt ist.

7. Gratleistenverbindung nach Anspruch 6, **dadurch gekennzeichnet, dass** in der Brettfläche (1) eine Gewindebüchse (28) eingesetzt ist, in die eine Stiftschraube (26) eingeschraubt ist.

8. Gratleistenverbindung nach Anspruch 1, **dadurch gekennzeichnet, dass** in der Gratleiste (20) eine Einlage (9) vorgesehen ist, welche Schrägflächen (30) aufweist, die durch senkrechte Ausnehmungen (40) unterbrochen sind, derart, dass die Gratleiste (20;20a-20d) senkrecht zur Brettfläche (1) einlegbar ist und in der Brettfläche oder Platte (1) partiell und formschlüssig verschiebbar und fixierbar ist.

9. Gratleistenverbindung nach Anspruch 8, **dadurch gekennzeichnet, dass** die Einlage(9) aus einem geformten Blechstreifen besteht.

10. Gratleistenverbindung nach Anspruch 8, **dadurch gekennzeichnet, dass** die Einlage (9) aus einem Giessoder Pressteil besteht.

## Claims

1. A sliding dovetail connection for the holding-straight of board surfaces and panels with at least one machined-in dovetail-shaped groove and a sliding dovetail which can be inserted in fitting manner thereinto, **characterized in that** the groove (2) has on its long sides, at equal intervals to each other and lying opposite one another, dovetail-shaped inclined surfaces (3), **in that** perpendicularly extending recesses (4) adjoin these inclined surfaces (3), which recesses interrupt the inclined surfaces (3) at equal intervals, **in that** the groove (2) extends on both sides only as far as the edge region of the board surface or panel (1) and **in that** the at least one sliding dovetail (20; 20a - 20d) is stepped and has inclined surfaces (30) in the narrow region which are interrupted by perpendicular recesses (40), the sliding dovetail (20; 20a - 20d) being able to be laid in perpendicularly to the board surface or panel (1) and being able to be displaced and fixed laterally in the board surface (1), and **in that** the inclined surfaces (30) lie at least partially in a positively locking manner against the inclined surfaces (3) of the groove (2).

2. A sliding dovetail connection according to Claim 1, **characterized in that** the sliding dovetail (20a, 20b) is formed in two parts and forms an intermediate space (Z) in the neutral fibers of the loaded board surface.

3. A sliding dovetail connection according to Claim 2, **characterized in that** the intermediate space (Z) is at least partially filled or fixed by a fixed or flexible element.

4. A sliding dovetail connection according to Claim 1, **characterized in that** the sliding dovetail (20c, 20d) is divided longitudinally and **in that** a wedge (24) is inserted centrally over the entire length of the sliding dovetail (20c, 20d).

5. A sliding dovetail connection according to Claim 4, **characterized in that** the wedge (24) lies springloaded, in a positively locking manner, against two inclined surfaces (23).

6. A sliding dovetail connection according to Claim 5, **characterized in that** the spring-loading of the wedge (24) takes place via at least one pre-stressed leaf spring (25) which is screwed centrally through the wedge (24) into the board surface (1).

7. A sliding dovetail connection according to Claim 6, **characterized in that** a threaded bush (28) is inserted in the board surface (1), into which bush a stud bolt (26) is screwed.

8. A sliding dovetail connection according to Claim 1, **characterized in that** an insert (9) is provided in the sliding dovetail (20), which insert has inclined surfaces (30) which are interrupted by perpendicular recesses (40), such that the sliding dovetail (20; 20a - 20d) can be placed in perpendicular to the board surface (1) and is displaceable and fixable partially and in a positively locking manner in the board surface or panel (1).

9. A sliding dovetail connection according to Claim 8, **characterized in that** the insert (9) consists of a shaped metal strip.

10. A sliding dovetail connection according to Claim 8, **characterized in that** the insert (9) consists of a cast or pressed part.

## Revendications

1. Connexion de baguette d'arête pour le maintien droit de surfaces de planches et de panneaux, comprenant au moins une rainure incorporée en forme de queue d'aronde et une baguette d'arête insérable avec ajustement dans cette dernière, **caractérisé en ce que** la rainure (2) présente sur ses côtés longitudinaux des biseaux (3) en forme de queue d'aronde, à distances égales les uns des autres et en vis-à-vis, que des creux (4) s'étendant perpendiculairement se raccordent à ces biseaux (3), lesquels creux interrompent à distances égales les biseaux (3), que la rainure (2) ne s'étend bilatéralement que jusqu'à la zone de bordure de la surface de planche ou du panneau (1), et que la au moins une baguette d'arête (20 ; 20a - 20d) est en déport et présente dans la zone étroite des biseaux (30), interrompus par des creux perpendiculaires (40), la baguette d'arête (20 ; 20a - 20d) étant insérable perpendiculairement à la surface de planche ou au panneau (1) et déplaçable et fixable latéralement dans la surface de planche (1), et que les biseaux (30) s'appliquent au moins partiellement par coopération de forme sur les biseaux (3) de la rainure (2).

2. Connexion de baguette d'arête selon la revendication 1, **caractérisé en ce que** la baguette d'arête (20a, 20b) est réalisée en deux parties et forme un espace intermédiaire (Z) dans la fibre neutre de la surface de planche sollicitée.

3. Connexion de baguette d'arête selon la revendication 2, **caractérisé en ce que** l'espace intermédiaire (Z) est rempli ou fixé au moins en partie par un élément résistant ou flexible.

4. Connexion de baguette d'arête selon la revendication 1, **caractérisé en ce que** la baguette d'arête (20c, 20d) est partagée longitudinalement, et qu'une clavette (24) est insérée au centre, sur toute la longueur de la baguette d'arête (20c, 20d).

5. Connexion de baguette d'arête selon la revendication 4, **caractérisé en ce que** la clavette (24) s'applique par coopération de forme, sous charge de ressort, sur deux biseaux (23).

6. Connexion de baguette d'arête selon la revendication 5, **caractérisé en ce que** la charge de ressort de la clavette (24) s'effectue par l'intermédiaire d'au moins un ressort à lames (25) précontraint, qui est vissé au centre au travers de la clavette (24) dans la surface de planche (1).

7. Connexion de baguette d'arête selon la revendication 6, **caractérisé en ce qu'**une douille taraudée (28), dans laquelle est vissé un goujon fileté (26), est mise en place dans la surface de planche (1).

8. Connexion de baguette d'arête selon la revendication 1, **caractérisé en ce qu'**il est prévu dans la baguette d'arête (20) un insert (9), qui présente des biseaux (30) interrompus par des creux perpendiculaires (40), de telle sorte que la baguette d'arête (20 ; 20a - 20d) est insérable perpendiculairement à la surface de planche (1) et déplaçable et fixable partiellement et par coopération de forme dans la surface de planche ou le panneau (1).

9. Connexion de baguette d'arête selon la revendication 8, **caractérisé en ce que** l'insert (9) est constitué d'un ruban de tôle formé.

10. Connexion de baguette d'arête selon la revendication 8, **caractérisé en ce que** l'insert (9) est constitué d'une pièce coulée ou estampée.
